# EUROPÄISCHE PATENTANMELDUNG

(11) **EP 4 656 347 A2**
(43) Veröffentlichungstag der Anmeldung: **03.12.2025**
(21) Anmeldenummer: 25209617.7
(22) Anmeldetag: 19.08.2024
(51) Int. Cl.: B29B 17/04

(54) **VERWENDUNG VON PCR MATERIAL UND DIGITALER DIREKTDRUCK AUF KARTUSCHEN**

(30) Priorität: 21.08.2023 DE 102023122330
(62) Teilanmeldung aus: 24195239.9
(71) Anmelder: Ritter GmbH, 86830 Schwabmünchen (DE)
(72) Erfinder: Preuß, Roman, 86316 Friedberg (DE); Krebber, Samuel, 86343 Königsbrunn (DE); Finis, Frank, 86199 Augsburg (DE); Novak, Frank, 86399 Bobingen (DE); Brandhuber, Florian, 86159 Augsburg (DE)
(74) Vertreter: Lermer, Christoph

(57) **Zusammenfassung**

Ein Kunststoffprodukt, beispielsweise Kartusche, umfasst einen Anteil von wenigstens 30 Gew.-% bis 100 Gew.-% PCR (Post Consumer Recycled) Material. Ein Verfahren zur Herstellung eines derartigen Kunststoffprodukts in einem Spritzgießverfahren umfasst die folgenden Schritte: Bereitstellung eines teil-recycletem Material umfassend einen Anteil von wenigstens 60 Gew.-% PCR; Verflüssigen des Kunststoffs; Einspritzen des flüssigen Kunststoffs in eine Kavität eines Werkzeugs; und (d) Entformen des Produkts nach Abkühlung.

## Beschreibung

### TECHNISCHES GEBIET

Die Anmeldung betrifft ein Kunststoffprodukt, beispielsweise Kartusche, und ein Verfahren zur Herstellung eines Kunststoffprodukts, insbesondere in einem Spritzgießverfahren.

### STAND DER TECHNIK

Kunststoffprodukte sind weit verbreitet, da sie leicht, günstig herzustellen, robust und daher praktisch sind. In unterschiedlichen Anwendungen sind Kunststoffprodukte und Kunststoffverpackungen nicht wegzudenken, so auch im Bereich der Aufbewahrung von Chemikalien zu Bauzwecken, wie Silikon, Acryl, etc. Je mehr Kunststoffcontainer jedoch zum Einsatz kommen, desto größer werden die Herausforderungen in Sachen Nachhaltigkeit. Der Einsatz von Rezyklat, wie PCR (Post Consumer Recycled) oder PIR (Post Industrial Recycled) Material, verringert das Problem der fehlenden Nachhaltigkeit.

Allerdings sind Rezyklate für viele Anwendungen ungeeignet oder schwierig in der Handhabung. So sind die Materialeigenschaften durch unterschiedliche Arten und Grade der Verunreinigung in verschiedenen Chargen von Rezyklat nicht definiert. Diese undefinierten Eigenschaften können sich auf die Geometrie, z.B. die Schwindmaße, auswirken. Zudem können Verunreinigungen mit dem Füllstoff einer Kartusche als auch mit außen an der Kartusche angebrachten Aufdrucken oder Beschichtungen wechselwirken und deren Wirkungsweise beeinträchtigen.

Es ist bisher nicht gelungen, Kunststoffkartuschen aus Materialien mit hohen Anteilen an Rezyklat, beispielsweise mit Anteilen über 60 Gew.-% Rezyklat, zuverlässig herzustellen.

### AUFGABE DER ERFINDUNG

Ausgehend davon ist es die Aufgabe der Erfindung, ein nachhaltiges Kunststoffprodukt ohne Beeinträchtigung der Produktqualität in einem Recycling-Prozess herzustellen.

### TECHNISCHE LÖSUNG

Die Erfindung betrifft ein Kunststoffprodukt, beispielsweise eine Kartusche, umfassend einen Anteil von wenigstens 30 Gew.-%, insbesondere von wenigstens 50 Gew.-%, insbesondere von wenigstens 60 Gew.-%, insbesondere von wenigstens 70 Gew.-%, insbesondere von wenigstens 80 Gew.-%, insbesondere von wenigstens 90 Gew.-%, insbesondere von 100 Gew.-%, an Rezyklat, insbesondere an PCR (Post Consumer Recycled) Material.

PCR (Post Consumer Recycled) Material wird u.a. aus Abfällen aus Lebensmittelverpackungen, beispielsweise PET-Flaschen, gewonnen. Das PCR (Post Consumer Recycled) Material weist meist einen Fremdstoffanteil von wenigstens 3-5 Gew.-% an Fremdstoffen auf. PCR ist also ein Kunststoff, der aus Abfall von Verbrauchern hergestellt wird. Diese recycelten Kunststoffe werden auch als rPET (Recycled Polyethylene Terephthalate), rPP (Recycled Polypropylene Plastic), rHDPE (Recycled High-Density Polythene), usw., bezeichnet.

PIR (Post Industrial Recycled) sind industrielle Kunststoffabfälle, die beispielsweise in der Produktion anfallen.

Das Kunststoffprodukt kann beispielsweise eine Kartusche zur Aufnahme von Füllmaterial sein. Die Erfindung ist jedoch nicht auf diese Anwendung beschränkt, sondern kann in beliebigen Anwendungen Einsatz finden.

Das Kunststoffprodukt kann eine Außenseite aufweisen, beispielsweise eine Wand, die eine Außenseite und eine Innenseite aufweist, wobei an der Außenseite ein Druckfeld angeordnet ist, das mittels Digitaldruck direkt bedruckt ist.

Mittels direktem Digitaldruck erzeugte Druckbilder auf (teil-)recyceltem Material mit hohem Rezyklat-Anteil wie in dieser Erfindung konnten bisher nicht in hoher Qualität mit hoher Lebensdauer hergestellt werden. Insbesondere wenn das Rezyklat nicht weiß, sondern grau oder schwarz ist, gelingt ein farbechter Digitaldruck nicht, vielmehr wurde in solchen Situationen im Stand der Technik ein Label verwendet. Der Anmelderin ist es jedoch gelungen, Kunststoffprodukte aus Rezyklat direkt digital zu bedrucken. Dabei wird beispielsweise zunächst ein weißer Untergrund gedruckt und darauf das eigentliche Druckbild. Insbesondere wurde im Rahmen der Erfindung ein rotationssymmetrischer Digitaldruck, z.B. an der Außenseite einer Kartusche, erfolgreich durchgeführt.

Da Recyclingmaterial in der Regel nicht klar ist, sondern schwarz, grau, grün, o.a., ist eine Einfärbung des Kunststoffs mit weiß praktisch unmöglich. Für einen brillanten, guten Farbdruck ist jedoch eine helle, weiße Ausgangsfläche (Untergrund) Grundvoraussetzung. Deshalb wird als erste Farbschicht flächig weiß aufgedruckt. Diese könnte in einer Ausführungsvariante zudem als Barriereschicht oder als Haftvermittler fungieren, sofern/indem eine dafür geeignete Materialzusammensetzung der Farbschicht verwendet wird.

Ein erfindungsgemäßes Verfahren zur Herstellung eines Kunststoffprodukts, insbesondere eines Kunststoffprodukts wie oben beschrieben, in einem Spritzgießverfahren umfasst die folgenden Schritte:
(a) Bereitstellung von teil-recycletem Material umfassend einen Anteil von wenigstens 30 Gew.-%, insbesondere von wenigstens 50 Gew.-%, insbesondere von wenigstens 60 Gew.-% PCR, insbesondere von wenigstens 70 Gew.-%, insbesondere von wenigstens 80 Gew.-%, insbesondere von wenigstens 90 Gew.-%, insbesondere 100 Gew.-%, an PCR (Post Consumer Recycled) Material.
(b) Verflüssigen des Kunststoffs,
(c) Einspritzen des flüssigen Kunststoffs in eine Kavität eines Werkzeugs,
(d) Entformen des Produkts nach Abkühlung.

Das Werkzeug kann eine Form und einen Kern aufweisen, die die Kavität begrenzen, und der Kern kann nach dem Schritt (c) und vor dem Schritt (d) aus dem Innenraum es Kunststoffprodukts heraus gezogen werden (Abziehform).

Ein alternatives Verfahren zur Herstellung wenigstens einer Komponente eines Kunststoffprodukts, insbesondere eines Kunststoffprodukts wie oben beschrieben, umfasst die folgenden Schritte:
(a) Bereitstellung von (teil-)recyceltem Kunststoffmaterial umfassend einen Anteil von wenigstens 30 Gew.-% - 100 Gew.-% PCR Material,
(b) Kontinuierliches Verflüssigen des Kunststoffmaterials,
(c) Extrudieren (Strangpressen) des Kunststoffmaterials zur Herstellung des Kunststoffprodukts bzw. der Komponente des Kunststoffprodukts.

Ein Anteil von wenigstens 30 Gew.-%- 100 Gew.-% PCR Material bedeutet, dass jeder Wert, eingeschlossen 30 Gew.-% und 100 Gew.-%, wie oben beschrieben (30 Gew.-%, 50 Gew.-%, 60 Gew.-% 70 Gew.-%, 80 Gew.-%, 90 Gew.-%, 100 Gew.-%) an PCR (Post Consumer Recycled) Material, als minimaler Grenzwert offenbart sein soll.

Ein weiterer Schritt in einem der obigen Verfahren kann sein:
(e) Direktes Bedrucken eines Druckfelds des Kunststoffprodukts mittels Digitaldruck.

Ein Kunststoffprodukt wie oben beschrieben und/oder hergestellt weist eine Außenkontur entsprechend (bzw. komplementär) einer Innenkontur eines Werkzeugs auf, und eine Innenkontur entsprechend (bzw. komplementär) einer Außenkontur eines Kerns, wobei die Innenkontur eine Entformschräge von 0,1° bis 15° aufweist, insbesondere von 0,1° bis 10°, insbesondere von 0,1° bis 5°, insbesondere von 0,1° bis 1°, insbesondere von 0,1 bis 0,5°.

Das Druckfeld kann insbesondere vorbehandelt sein, insbesondere kann das Druckfeld flächig weiß vor-bedruckt werden. Danach findet ein direktes Aufdrucken mittels Digitaldruck auf das Druckfeld Anwendung, z.B. in einem Laser- oder Tintenstrahldruckverfahren.

Das Kunststoffprodukt kann insbesondere ein Kartuschenbehälter bzw. die in der Regel zylindrische Außenwand eines Kartuschenbehälters oder einer Kartuschenkammer sein.

Kunststoffprodukte gemäß der Erfindung weisen einen deutlich reduzierten produktbezogenen CO₂-Fußabdruck auf.

## Patentansprüche

1. Kartuschenbehälter umfassend einen Anteil von wenigstens 30 Gew.-%, insbesondere von wenigstens 50 Gew.-%, insbesondere von wenigstens 60 Gew.-%, insbesondere von wenigstens 70 Gew.-%, insbesondere von wenigstens 80 Gew.-%, insbesondere von wenigstens 90 Gew.-%, insbesondere von 100 Gew.-%, an PCR (Post Consumer Recycled) Material.

2. Kartuschenbehälter nach Anspruch 1, wobei das PCR (Post Consumer Recycled) Material einen Fremdstoffanteil von wenigstens 3-5 Gew.-% Fremdstoffen beinhaltet.

3. Kartuschenbehälter nach Anspruch 1 oder 2, wobei der Kartuschenbehälter ein Aufnahmebehälter einer Kartusche zur Aufnahme von Füllmaterial ist.

4. Kartuschenbehälter nach einem der vorhergehenden Ansprüche, wobei der Kartuschenbehälter eine Außenseite aufweist, wobei an der Außenseite ein Druckfeld angeordnet ist, das mittels Digitaldruck direkt bedruckt ist.

5. Verfahren zur Herstellung eines Kartuschenbehälters, insbesondere eines Kartuschenbehälters nach einem der Ansprüche 1 bis 4, in einem Spritzgießverfahren umfassend die folgenden Schritte:
(a) Bereitstellung von (teil-)recycletem Kunststoffmaterial umfassend einen Anteil von wenigstens 30 Gew.-% PCR,
(b) Verflüssigen des Kunststoffmaterials,
(c) Einspritzen des flüssigen Kunststoffmaterials in eine Kavität eines Werkzeugs, und
(d) Entformen des Produkts nach Abkühlung.

6. Verfahren nach Anspruch 5, wobei das Werkzeug eine Form und einen Kern aufweist, die die Kavität begrenzen, und der Kern nach dem Schritt (c) und vor dem Schritt (d) aus dem Innenraum des Kartuschenbehälters heraus gezogen wird (Abziehform).

7. Verfahren zur Herstellung eines Kartuschenbehälters, insbesondere eines Kartuschenbehälters nach einem der Ansprüche 1 bis 4, umfassend die folgenden Schritte:
(a) Bereitstellung von (teil-)recyceltem Kunststoffmaterial umfassend einen Anteil von wenigstens 30 - 100 Gew.-% PCR Material,
(b) Kontinuierliches Verflüssigen des Kunststoffmaterials,
(c) Extrudieren (Strangpressen) des Kunststoffmaterials zur Herstellung des Kartuschenbehälters.
Verfahren nach einem der Ansprüche 5 bis 7, umfassend einen weiteren Schritt:Direktes Bedrucken eines Druckfelds des Kartuschenbehälters mittels Digitaldruck.

8. Verfahren nach Anspruch 8, wobei das Bedrucken des Druckfelds des Kartuschenbehälters in einem rotationssymmetrischen Digitaldruck erfolgt.

9. Verfahren nach einem der Ansprüche 8 oder 9, wobei vor dem Bedrucken des Druckfelds des Kartuschenbehälters im Druckfeld ein weißer Untergrund aufgedruckt wird.

10. Kartuschenbehälter nach einem der vorhergehenden Ansprüche 1-4, wobei der Kartuschenbehälter insbesondere in einem Spritzgießverfahren nach einem der Ansprüche 5 bis 7 hergestellt ist, wobei der Kartuschenbehälter eine Außenkontur entsprechend einer Innenkontur eines Werkzeugs umfasst und eine Innenkontur entsprechend einer Kontur eines Kerns, wobei die Innenkontur eine Entformschräge von 0,1° bis 45° aufweist, insbesondere von 0,1° bis 20°, insbesondere von 0,1° bis 10°, insbesondere von 0,1° bis 1°, insbesondere von 0,1° bis 0,5°.
